# EUROPEAN PATENT APPLICATION

(11) **EP 3 831 459 A1**
(43) Date of publication of application: **09.06.2021**
(21) Application number: 18928929.1
(22) Date of filing: 09.11.2018
(51) Int. Cl.: B01D 39/10, B01D 35/30, B01D 37/04, B01D 35/20, B01D 35/16

(54) **WATER TREATMENT FILTER AND FILTER APPARATUS COMPRISING SAME**

(30) Priority: 03.08.2018 KR 20180090855
(71) Applicant: ARUN Co., Ltd., Incheon 21314 (KR)
(72) Inventor: OH, Soon-bong, Incheon 22001 (KR)
(74) Representative: Isarpatent
(86) International application number: PCT/KR2018/013643
(87) International publication number: WO 2020/027383

(57) **Abstract**

The present invention relates to a filter for water treatment exhibiting high filtering capability by preventing vortices, and a filter apparatus comprising same. Provided is a filter for water treatment, which is a cross flow type filter for water treatment, comprising: a metal thin plate; and a plurality of micropores passing through the metal thin plate so as to filter water flowing on one side of the metal thin plate, wherein a micropore includes: an inlet port which is formed on one surface of the metal thin plate and through which water flows in; a discharge port which is formed on the other surface positioned opposite from the one surface of the metal thin plate, and through which the water flowing in through the inlet port is discharged; and a curved portion which is convexly curved towards the inside of the micropore, connects the inlet port and the discharge port, wherein the curved portion and the other surface form a singular surface.

## Description

### TECHNICAL FIELD

The present invention relates to a water treatment filter and a filter apparatus comprising same, and more particularly, relates to a water treatment filter exhibiting high filtering capability by preventing vortices and a filter apparatus comprising same.

### BACKGROUND ART OF THE INVENTION

The filter is made of a plate or tubular material with a porous plate material, and is interposed in the tubular portion through which the fluid flows to perform the function of filtering foreign substances contained in the flowing fluid. When such a filter performs a filtration process to remove foreign substances from the supplied water, micropores formed in the filter are clogged by foreign substances.

A filter to prevent a phenomenon that such micropores are blocked by foreign substances, that is, filter clogging phenomenon, is disclosed in Korean Patent Publication No. 10-2006-0037051. The disclosed filter comprises a cylindrical support frame having an opening in a side surface thereof and a plurality of thin plates covering the side surface of the support frame and being overlapped with each other, wherein a plurality of micropores are formed in the thin plate, the micropores have a minimum diameter at a central position in the thickness direction, and a groove connecting the micropores is formed on a surface opposite to the surface facing the support frame side of the thin plate to improve the filtering efficiency. In the disclosed filter, foreign substances trapped in the micropores is removed by pulsed air ejected toward the direction of filtering.

However, in such a filter, the micropores formed in the filter are opened parallel to the direction of fluid transfer, and the diameter of the inner wall of the groove forming the micropores is enlarged, reduced, and enlarged in the shape of an hourglass so that the foreign substances are often attached to the inner wall of the groove, and thus, there is a problem in that micropores must be frequently backwashed by a pulsed air in a state where the filtering process is stopped. Moreover, foreign substances sticking to the inner wall of the groove located at the upstream end in the filtering direction have a problem that they are not separated from the inner wall of the groove by backwashing.

Korean Patent Registration No.1763916 is disclosed for solving such problems. The disclosed filter assembly is made of a filter assembly wherein a filter equipped with a plurality of taper-shaped micropores whose diameter is getting narrower as it travels toward the horizontal or downstream end of the flow direction of the fluid containing solid foreign substances, is distributedly equipped at the upstream end of the branch pipe branched to form a filtering flow path being passed through the filter in cooperation with the distribution duct and a non-filtering flow path not being passed through the filter, in the middle of the distribution duct through which the fluid containing the foreign substance flows.

In the filter assembly with this configuration, contaminated water containing foreign substances is divided into filtered fluid and non-filtered fluid by the filter, and foreign substances stuck in the opening contacts the exposed surface of the upstream side more than the exposed surface of the downstream side. Therefore, as the foreign substances flow faster on the exposed surface of the upstream side than on the exposed surface of the downstream side, a lift force is generated against the foreign substances according to the Bernoulli principle, and the foreign substances stuck in the opening can be separated from the opening by the lift force. Accordingly, even if the filtration treatment for contaminated water is performed for a long time, the opening formed in the filter is not blocked, thereby providing an effect of continuously performing the filtration process without filter replacement or filter cleaning.

However, when a fluid containing a high concentration of solid foreign substances is filtered, there has been a problem in that air bubbles contained in the high concentration fluid adhere to the inner and outer surfaces of the filter and the inner surfaces of the plurality of openings formed in the filter, and generate a surface tension which causes the solid foreign substances contained in the fluid to adhere to the filter, thereby reducing the filtration efficiency.

In addition, the filter comprises a thin plate and an opening penetrating through the thin plate, and the angle between the inner side of the opening and one side of the thin plate rapidly changes at a point where the opening ends. Accordingly, the fluid discharged from the filter forms vortices at the point where the opening ends. There has been a problem in that the vortices reduce the amount of filtration by acting as a resistance against the fluid passing through the opening.

In addition, a filter is provided inside the distribution duct to filter contaminated water. In this case, a laminar (streamline) flow is formed between the outer surface of the filter and the inner circumferential surface of the distribution duct. This laminar (streamline) flow also plays a function of removing foreign substances (cake) laminated on a cross flow type filter. When the laminar (streamline) flow has different flow rates along the outer circumferential surface of the filter, vortices occur in some sections of the laminar (streamline) flow. There has been a problem in that the generated vortices act as resistance against the laminar (streamline) flow and eventually reduce the flow velocity of the entire laminar (streamline) flow, thereby degrading the function of removing foreign substances (cake) in the laminar (streamline) flow.

### SUMMARY OF INVENTION

### TECHNICAL PROBLEMS

An objective of the present invention is to provide a filter for water treatment and a filter apparatus comprising same that remove the foreign substances adhered to a filter during a filtration process, through an embodiment.

Another objective of the present invention is to provide a filter for water treatment and a filter apparatus comprising same that increase the amount of filtration by reducing the formation of vortices in a fluid passing through the filter, through an embodiment.

Another objective of the present invention is to provide a filter for water treatment and a filter apparatus comprising same that minimize the decrease in the flow velocity of laminar (streamline) flow by reducing the formation of vortices in the laminar (streamline) flow between the filter and the distribution duct in which the filter is accommodated, through an embodiment.

Another objective of the present invention is to provide a filter for water treatment and a filter apparatus comprising same that detect clogging of the filter and remove the clogging of the filter at an appropriate time, through an embodiment.

### TECHNICAL SOLUTION

According to an aspect of the present invention, there is provided a filter for water treatment which is a cross flow type filter for water treatment, comprising: a metal thin plate; and a plurality of micropores passing through the metal thin plate so as to filter water flowing on one side of the metal thin plate, wherein a micropore includes: an inlet port being formed on one surface of the metal thin plate, wherein water flows in the micropore through the inlet port; a discharge port being formed on the other surface positioned opposite from the one surface of the metal thin plate, wherein the water flowing in through the inlet port is discharged through the discharge port; and a curved portion, being convexly curved towards an inside of the micropore, connecting the inlet port and the discharge port, wherein the curved portion and the other surface form a singular surface. According to another aspect of the present invention, the curved portion and the one surface of the metal thin plate may form the singular surface.

According to another aspect of the present invention, the filter may further comprise a discharge adjacent portion, provided on the other surface of the metal thin plate, located between the two closest micropores, and the discharge adjacent portion may be formed convex in a direction away from the metal thin plate.

According to another aspect of the present invention, the discharge adjacent portion may be formed on the singular surface.

According to another aspect of the present invention, the micropore may be formed with a minimum diameter in one region of the curved portion, wherein the ratio between the diameter of the inlet port, the minimum diameter, and the diameter of the discharge port may be 2:1:2.

According to another aspect of the present invention, the micropore may be formed with a minimum diameter in one region of the curved portion, wherein the ratio between the diameter of the inlet port, the minimum diameter, and the diameter of the discharge port may be 5:1:5.

According to another aspect of the present invention, the micropore may be formed with a minimum diameter in one region of the curved portion, wherein the ratio of the minimum diameter to the thickness of the metal thin plate may be 50% or more.

According to another aspect of the present invention, there is provided a filter apparatus comprising: a distribution duct where contaminated water containing foreign substances flows; a filter assembly provided inside the distribution duct and comprising a filter housing formed by being extended in the lengthwise direction of the distribution duct, and a cross flow type filter for water treatment provided on an outer circumferential surface of the filter housing and filtering a part of the contaminated water and guiding it into the filter housing; and spacers provided at a regular interval along the outer circumference of the filter assembly so that a distance between the outer circumferential surface of the housing and the inner circumferential surface of the distribution duct is kept constant along the outer circumference of the housing. According to another aspect of the present invention, the spacers may be extended in the lengthwise direction of the filter assembly.

According to another aspect of the present invention, the spacer may be formed in a streamlined shape.

According to another aspect of the present invention, the center of mass of the filter for water treatment may be disposed toward the upstream side spaced apart from the center of mass of the filter housing.

According to another aspect of the present invention, there is provided a control method for a filter apparatus comprising: a distribution duct where contaminated water containing foreign substances flows; a filter assembly provided inside the distribution duct and comprising a filter housing formed by being extended in the lengthwise direction of the distribution duct, and a cross flow type filter for water treatment provided on an outer circumferential surface of the filter housing and filtering a part of the contaminated water and guiding it into the filter housing; an ultrasonic generator adjacent to the filter assembly and generating ultrasonic waves; and a pressure sensor that is provided toward the downstream side spaced apart from the filter assembly and senses a water pressure of the distribution duct, wherein the control method comprises the steps of: supplying pre-filtered clean water into the filter housing; supplying contaminated water containing foreign substances into the distribution duct after stopping supplying of pre-filtered clean water; determining whether the filter is clogged based on the pressure detected by the pressure sensor; and cleaning the filter by performing at least one of generating ultrasonic waves in the ultrasonic generator and supplying pre-filtered water to the filter housing when it is determined that the filter is clogged in the step of determining whether the filter is clogged.

According to another aspect of the present invention, in the step of supplying the clean water, the clean water may be supplied into the filter housing without passing through the filter so that foreign substances of the filter are discharged to the distribution duct.

According to another aspect of the present invention, in the step of supplying the clean water, when the clean water is supplied, the ultrasonic generator may generate ultrasonic waves toward the filter for water treatment.

According to another aspect of the present invention, the step of cleaning the filter may comprise a first filter cleaning mode in which ultrasonic waves are generated by the ultrasonic generator; and a second filter cleaning mode in which ultrasonic waves are generated by the ultrasonic generator and pre-filtered water is supplied into the filter housing. According to another aspect of the present invention, the first filter cleaning mode may be executed when the pressure detected by the pressure sensor is within a predetermined range, and the second filter cleaning mode may be executed when the pressure detected by the pressure sensor exceeds the predetermined range.

### ADVANTAGEOUS EFFECTS OF INVENTION

According to at least one of embodiments of the present invention, a filter for water treatment and a filter apparatus comprising same can have the following effects.

According to at least one of embodiments of the present invention, the filter and the filter apparatus can have an effect of removing foreign substances adhered to the filter during the filtration process.

According to at least one of embodiments of the present invention, the filter and the filter apparatus can have an effect of increasing the amount of filtration by reducing the formation of vortices in the fluid passing through the filter. According to at least one of embodiments of the present invention, the formation of vortices in a laminar (streamline) flow between a filter and a distribution duct in which the filter is accommodated is reduced, thereby the filter and the filter apparatus can have an effect of minimizing the decrease in the flow velocity of the laminar (streamline) flow. According to at least one of embodiments of the present invention, the filter and the filter apparatus can have an effect of removing the clogging of the filter at an appropriate time by detecting clogging of the filter.

### BRIEF DESCRIPTION OF DRAWINGS

FIG. 1 is a schematic diagram for explaining a filter for water treatment and a filter apparatus comprising same according to an embodiment of the present invention according to an embodiment of the present invention.
FIG. 2 is an exploded perspective view showing the filter assembly illustrated in FIG. 1.
FIG. 3 is a diagram for explaining vortices generally appearing in a fluid that has been passed through the filter.
FIG. 4 is a cross-sectional view showing the filter illustrated in FIG. 1.
FIG. 5 is a cross-sectional view showing the filter shown in FIG. 1 and a first filter support portion supporting the filter.
FIG. 6 is an exploded perspective view showing a spacer that separates the filter assembly shown in FIG. 1 from a distribution duct.
FIG. 7 is a cross-sectional view showing the filter assembly separated from the inner side surface of the distribution duct through the distribution duct and the spacer.
FIG. 8 is a schematic diagram showing a distribution duct and a filter assembly.
FIG. 9 is a flowchart showing a method of controlling a filter apparatus according to an embodiment of the present invention.
FIG. 10 is a flowchart specifically explaining the control method shown in FIG. 9.

### DETAILED DESCRIPTION OF EMBODIMENTS

It should be understood that the embodiments described hereinafter are illustratively shown to aid understanding of the invention, and the present invention may be implemented with various modifications different from the embodiments described herein. However, in describing the present invention, when it is determined that a detailed description of a well-known function or component may unnecessarily obscure the gist of the present invention, the detailed description and detailed illustration thereof will be omitted. In addition, the accompanying drawings are not drawn to scale to aid understanding of the invention, but dimensions of some components may be exaggeratedly illustrated.

The terms 'first' and 'second' used in the present application may be used to describe various components, but the components should not be limited by the terms. The terms are only used for the purpose of distinguishing one component from another component.

In addition, terms used in the present application are only used to describe specific embodiments, and are not intended to limit the scope of the rights. Singular expressions include plural expressions unless the context clearly indicates otherwise. In the present application, terms such as "comprise", "consist of" or "comprised of" are intended to designate the existence of features, numbers, steps, operations, elements, components, or combinations thereof described in the present application, and it is to be understood that it does not preclude the possibility of the presence or addition of one or more other features or numbers, steps, operations, elements, components, or combinations thereof.

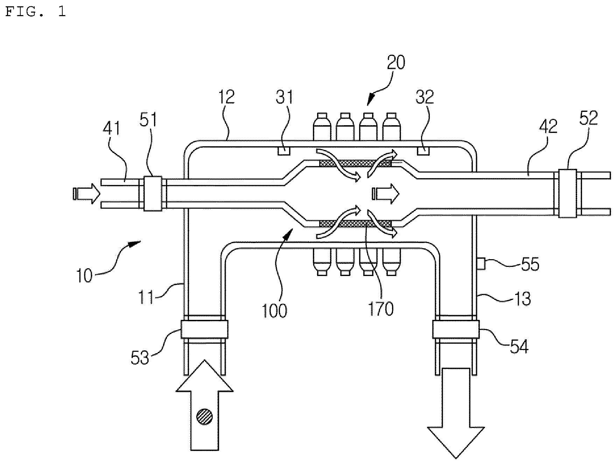

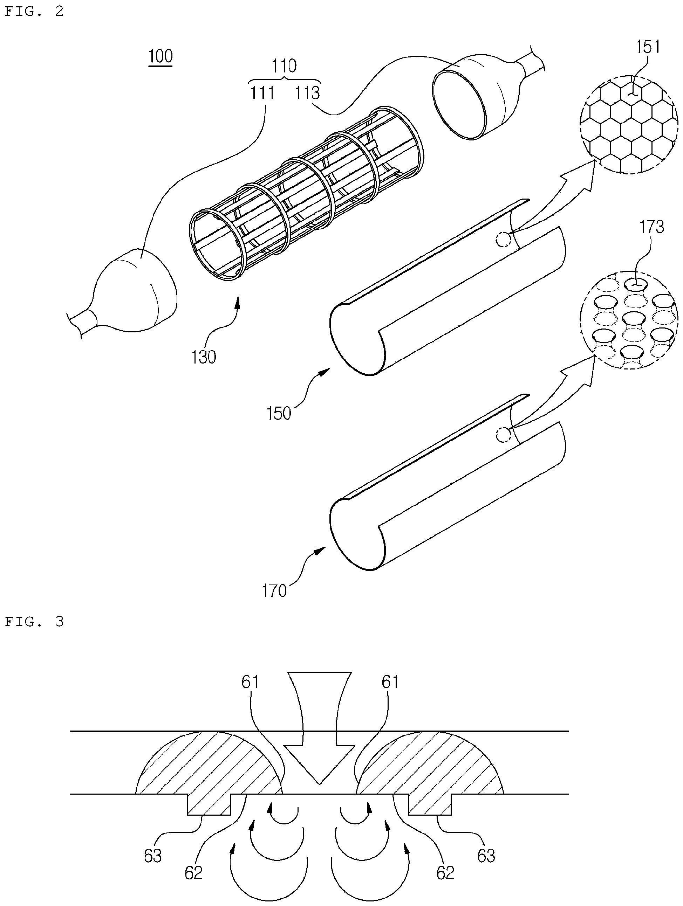

Hereinafter, a filter for water treatment **170** and a filter apparatus 1 comprising same according to an embodiment of the present invention will be described with reference to FIGS. 1 and 2. FIG. 1 is a schematic diagram for explaining a filter for water treatment **170** and a filter apparatus **1** comprising same according to an embodiment of the present invention, and FIG. 2 is an exploded perspective view showing the filter assembly **100** illustrated in FIG. 1.

Referring to FIGS. 1 and 2, a filter for water treatment **170** and a filter apparatus **1** comprising same according to an embodiment of the present invention comprises a distribution duct **10** through which contaminated water containing foreign substances flows, a filter assembly **100** provided inside the distribution duct **10** and comprising a cross flow type filter for water treatment **170,** and a spacer **70** that separates the filter assembly **100** from the distribution duct **10.**

The distribution duct **10** is formed so that contaminated water containing foreign substances flows inside, and it comprises a supply duct **11** to supply contaminated water, a connection duct **12** communicating with the supply duct **11** and forming a predetermined angle with the supply duct **11,** and a discharge duct **13** communicating with the connection duct **12** and forming a predetermined angle with the connection duct **12.** The contaminated water passes through the supply duct **11,** the connection duct **12,** and the discharge duct **13** in sequence. The contaminated water flowing through the discharge duct **13** may be fed back into the supply duct **11** or discharged to another apparatus.

The filter assembly **100** is accommodated in the connection duct **12** and performs a function of filtering the supplied contaminated water. The filter assembly **100** comprises a filter housing formed by being extended in the lengthwise direction of the connection duct **12,** and a cross flow type filter for water treatment **170** (hereinafter referred to as a filter) being provided on the outer circumferential surface of the filter housing **110,** filtering a part of contaminated water, and guiding it into the filter housing **110.**

The filter housing **110** comprises a first housing **111** positioned upstream side of the connection duct **12** and a second housing **113** positioned downstream side of the first housing **111.** The contaminated water flowing inside the connection duct **12** passes through the first housing **111** and the second housing **113** in sequence. The filter housing **110** is supply with clean water through a first filtration duct **41** and discharges the filtered water through a second filtration duct **42.** The first filtration duct **41** supplies clean water from the outside of the distribution duct **10** to the filter housing **110,** and the second filtering duct **42** discharges the filtered water inside the filter housing **110** to the outside of the distribution duct **10.**

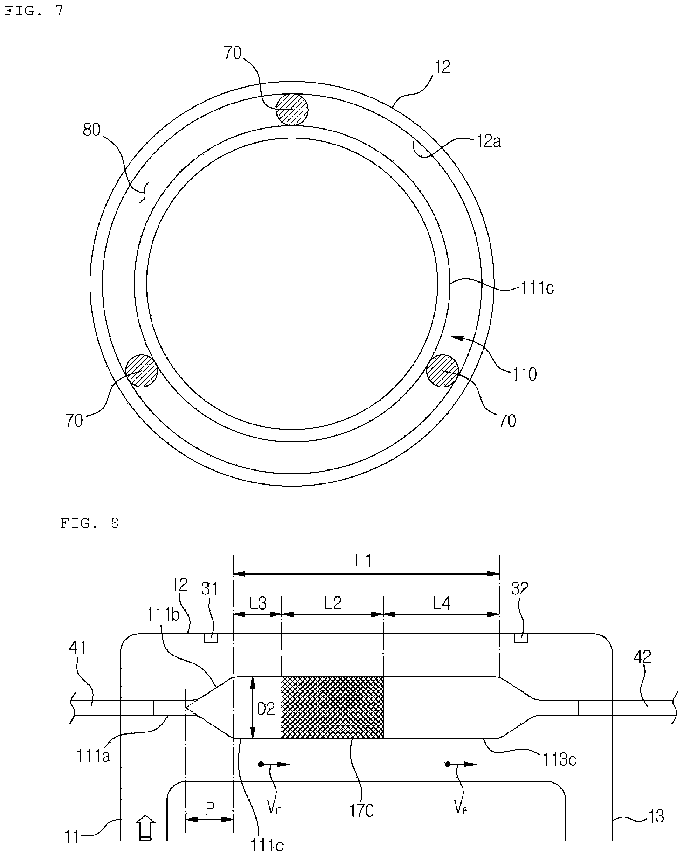

Such filter housing **110,** as illustrated in Figure 7, comprises a first housing **111** communicating with the first filtration duct **41,** and a second housing **113** communicating with the second filtration duct **42.The** first housing **111** and the second housing **113** are spaced apart from each other, and a filter **170** is provided between the first housing **111** and the second housing **113.**

The first housing **111** comprises a first protruding duct **111a** communicating with the first filtration duct **41,** and a first inclined portion **111b** communicating with the first protruding duct **111a** and gradually increasing in diameter toward the downstream side, and a first body portion **111c** whose outer circumferential surface is formed approximately horizontally with the direction in which the contaminated water flows.

The second housing **113** comprises a second protruding duct **113a** communicating with the second filtration duct **42,** a second inclined portion **113b** communicating with the second protruding duct **113a** and gradually increasing in diameter toward the downstream side, and a second body portion **113c** whose outer circumferential surface is formed approximately horizontally with the direction in which the contaminated water flows. The first body portion **111c** and the second body portion **113c** are formed so as to be coupled to the both ends of the filter **170,** respectively.

The filter **170** is a cross flow type filter for water treatment **170,** and comprises a plurality of micropores **173** penetrating the metal sheet to filter a part of the water flowing from one side of the metal thin plate and the metal sheet. The filter **170** may be coupled to the filter housing **110** by rolling so that both ends located opposite to each other meet. In this case, an internal space is formed inside by the filter **170** and the filter housing **110,** and the contaminated water filtered by the filter **170** is collected in the internal space of the filter housing **110,** and discharged through the second filtration duct **42.** A detailed description of the filter **170** will be described later.

Meanwhile, the filter housing **110** may further comprise a first support part **150** and a second support part **130** for supporting the filter **170.**

The first support portion **150** is in contact with and supports the filter **170,** and, as an example, may be formed in a honeycomb structure in which a through hole **151** of the first support portion **150** is formed. Like the filter **170,** it is rolled so that both ends located opposite to each other meet, and then coupled to the filter housing **110.**

The second support part **130** contacts and supports the first support part **150,** and, as for an example, it may be formed in a grid-like structure. It is formed in the shape of a hollow cylinder, and both ends thereof are coupled to the filter housing **110.**

Accordingly, the contaminated water passes through the filter **170,** the first support part **150,** and the second support part **130** in sequence.

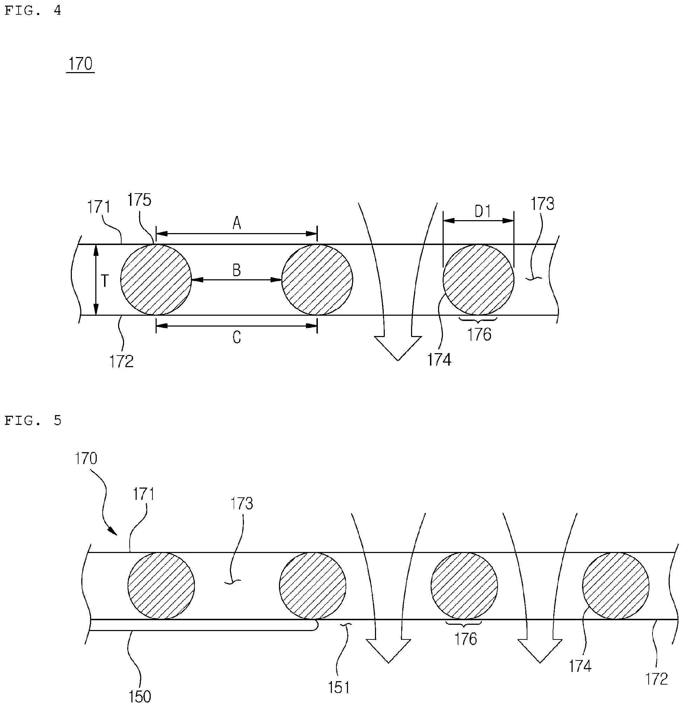

Hereinafter, the filter **170** will be described in detail with reference to FIGS. 3 to 6. FIG. 3 is a view for explaining vortices generally appearing in the fluid passing through the filter **170,** FIG. 4 is a cross-sectional view showing the filter **170** illustrated in FIG. 1, and FIG. 5 is a cross-sectional view showing the filter **170** illustrated in FIG. 1 and the first support part **150** supporting the filter **170.**

A general filter **170** is made of a thin plate in which micropores **173** are formed as illustrated in FIG. 3, and the inner side surface **61** of the micropores **173** and one surface **62** of the thin plate form a predetermined angle. Accordingly, vortices are formed in the fluid passing through the micropores **173** along the arrow. These vortices hinder the flow by acting as a resistance against the flowing fluid. In addition, support protrusions **63** for supporting the thin plate may be formed, and vortices may be additionally formed by the support protrusions **63.** Therefore, the filtering amount per unit time of the filter **170** is not high.

Referring to Fig. 4, the micropores **173** of the filter **170** according to an embodiment of the present invention may comprise an inlet port **A** formed on one surface **171** of the thin metal plate and into which water flows, a discharge port **C** formed on the other surface **172** located on the opposite side of the metal sheet and through which the water introduced through the inlet port **A** is discharged, and a curved portion **174** that is convexly curved toward the inner side of the micropores **173** to connect the inlet **A** and the discharge port **C.** as the curved portion 174 and the other surface **172** of the thin metal plate may form a singular surface.

The filter **170** may let the contaminated water supplied to the micropores **173** through the inlet port **A** be discharged into the filter housing **110** through the discharge port **C** after filtering through curved portion **174.** In this case, the filter **170** can minimize the occurrence of vortices in the fluid leaving the micropores **173** because the curved portion **174** forms a curved surface, and the curved portion **174** and the other surface **172** of the thin metal plate form the singular surface. Accordingly, the amount of filtration can increase. Meanwhile, the inlet port **A** is illustrated to have a circular cross-section crossing the lengthwise direction of the micropores **173** in FIG. 2, but is not limited thereto, and may be formed in various shapes such as a rectangle and the like. , and A discharge adjacent portion **176** located between the two closest micropores **173** may be formed on the other surface **172** of the thin metal plate. The discharge adjacent portion **176** may be convexly formed in a direction away from the metal thin plate. In other words, a portion between the two micropores **173** formed in the thin metal plate may be formed in a streamlined shape. Accordingly, generation of vortices in the fluid leaving the micropores **173** can be further minimized. The discharge adjacent portion **176** and the curved portion **174** may form the singular surface.

The filter **170** may be formed such that the curved portion **174** and the one surface **171** of the thin metal plate form the singular surface. In this case, the occurrence of vortices in laminar (streamline) flow, which will be described later, may be reduced.

Meanwhile, the micropores **173** have a minimum diameter **B** in one region of the curved portion **174.** When the foreign substances contained in the contaminated water are larger than the minimum diameter **B,** since they cannot pass through the micropores **173,** the minimum diameter **B** may be defined as the diameter of the micropores **173.**

The micropores **173** may have a ratio of 2:1:2 between the diameter of the inlet **A,** the minimum diameter **B,** and the diameter of the discharge port **C,** for an example. Approximately, the diameter of the inlet port **A** may be 40 µm, the minimum diameter **B** may be 20 µm, and the diameter of the discharge port C may be 40 µm.

Of course, it does not exclude the case where: the diameter of the inlet port **A** is 40*µ*m, the minimum diameter **B** is 14*µ*m, the diameter of the discharge port **C** is 40*µ*m; the diameter of the inlet port **A** is 40*µ*m, the minimum diameter **B** is 8*µ*m, the diameter of the discharge port **C** is 40*µ*m; the diameter of the inlet port **A** is 40*µ*m, the minimum diameter **B** is 4*µ*m, the diameter of the discharge port **C** is 40*µ*m; or, the diameter of the inlet port **A** is 40*µ*m, the minimum diameter **B** is 1*µ*m, the diameter of the discharge port **C** is 40*µ*m. Accordingly, the ratio between the diameter of the inlet port **A,** the minimum diameter **B,** and the diameter of the discharge port **C** may be 5:1:5.

However, when the ratio between the diameter of the inlet port **A,** the minimum diameter **B,** and the diameter of the discharge port **C** is 2:1:2, the foreign substances trapped in the micropores **173** can be easily escaped by the laminar (streamline) flow. In this case, the higher the ratio of the minimum diameter **B,** the easier it is for foreign substances to be escaped.

Meanwhile, the filter **170** may have 50% or more of the ratio of the minimum diameter **B** to the thickness **T** of the thin metal plate. When the thickness **T** of the thin metal plate is too large than the minimum diameter **B,** foreign substances cannot easily be escaped due to the laminar (streamline) flow. For an example, the thickness **T** of the metal thin plate may be 20 µm and the minimum diameter **B** may be 20 µm. Of course, the case where the thickness **T** of the metal thin plate is 23 µm and the minimum diameter **B** is 14 µm, 8 µm, 4 µm, and 1 µm is not excluded.

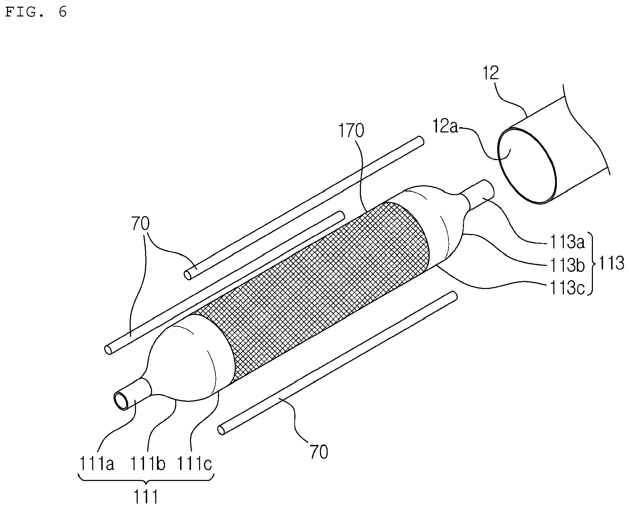

Meanwhile, referring to FIG. 6, the first support part **150 (referring to** **FIG. 2****)** is in contact with the other surface of the filter **170** to support the filter **170** in which the micropores **173 (referring to** **FIG. 2****)** may be formed. The contaminated water that has passed through the micropores **173 (referring to** **FIG. 2****)** may be in contact with the first support part **150 (referring to** **FIG. 2****)** while passing through the through hole **151 (referring to** **FIG. 2****)** formed in the first support part **150 (referring to** **FIG. 2****).** In this case, the filtered contaminated water may have vortices formed by the first support part **150 (referring to** **FIG. 2****).**

Since the filtered contaminated water passes through the through hole **151 (referring to** **FIG. 2****)** formed in the first support part **150 (referring to** **FIG. 2****),** the formation of vortices can be reduced when the part forming the circumference of the through hole **151 (referring to** **FIG. 2****)** is formed in a round shape without being angled through electrolytic polishing.

Hereinafter, a characteristic of maintaining a laminar (streamline) flow formed between the filter assembly **100** and the distribution duct **10** will be described with reference to FIGS. 6 to 8.

Referring to FIG. 6 to 8, a laminar (streamline) flow forming space **80** may be provided between the outer circumferential surface of the filter assembly **100** and the inner circumferential surface of the distribution duct **10.** When the thickness of the laminar (streamline) flow forming space **80,** that is, the distance between the outer circumferential surface of the filter assembly **100** and the inner circumferential surface of the distribution duct **10** is formed equally along the outer circumference of the filter assembly **100,** it is helpful in maintaining the laminar (streamline) flow.

In other words, on the cross-section crossing the lengthwise direction of the filter assembly **100,** the distance between the outer circumferential surface of the filter assembly **100** and the inner circumferential surface of the distribution duct **10** is formed equally along the outer circumference of the filter assembly **100,** is helpful in maintaining the laminar (streamline) flow.

In the case, when the distance between the outer circumferential surface of the filter assembly **100** and the inner circumferential surface of the distribution duct **10** is not formed equally along the outer circumference of the filter assembly **100,** a difference in flow velocity occurs between the laminar (streamline) flows. This difference in flow rate does not maintain laminar (streamline) flow and generates vortices in some sections. Since vortices act as a resistance against laminar (streamline) flow, the flow rate of the laminar (streamline) flow decreases and the function of removing foreign substances trapped in the filter **170** is degraded.

On the outer circumferential surface of the filter assembly **100,** as illustrated in FIGS. 6 and 7, a bar-shaped spacer **70** being extended in the lengthwise direction of the filter assembly **100** may be provided in parallel to the filter assembly **100.** Two or more spacers **70** may be disposed at intervals along the circumference of the filter assembly **100.** Therefore, the thickness of the spacers **70** and the thickness of the laminar (streamline) flow forming space **80** may be substantially identical. Accordingly, as the bar-shaped spacers **70** are used, the laminar (streamline) flow can be maintained with a simple configuration, thereby reducing cost and improving durability.

The spacer **70** may be formed in a shape whose diameter gradually decreases as both ends travel farther away from the center. For example, the spacer **70** may have a central portion parallel to the flow of contaminated water, but the overall shape may be streamlined. Accordingly, the spacer **70** can reduce the occurrence of vortices by minimizing interference of laminar (streamline) flow.

Meanwhile, the laminar (streamline) flow formed in the contaminated water flows along the outer circumferential surface of the filter assembly **100,** while a portion thereof is filtered by the filter **170** and the other portion thereof is not filtered and discharged through a discharge duct **13.** When filtration of contaminated water starts, a portion of the supplied contaminated water is filtered and introduced into the inner circumference of the filter assembly **100.** Accordingly, the rear end velocity formed on the downstream side of the filter assembly **100** is smaller than the front end velocity formed on the upstream side of the filter assembly **100.** The rear end speed becomes smaller as it travels toward the downstream side. Accordingly, the removal rate of foreign substances forming a cake on the filter **170** by the foreign substances becomes lowered as it travels toward the rear end of the filter **170.**

Accordingly, the filter **170** may be disposed, for an example, such that the center of mass is spaced apart from the center of mass of the filter housing **110** toward the upstream side. In other words, the separation distance **L3** between the front end of the filter **170** and the front end of the filter housing **110** may be smaller than the separation distance **L4** between the rear end of the filter **170** and the rear end of the filter housing **110.** In this case, the length **L2** of the filter **170** and the length **L1** of the filter housing **110** may be set in consideration of the amount of filtration.

Meanwhile, the filter housing **110** has a larger diameter of the portion where the filter **170** is mounted, and the diameter thereof is getting smaller as it travels away from the portion where the filter **170** is mounted. This is to increase the amount of filtration. In particular, when the filter housing **110** is formed so that the outer circumferential surface of the portion on which the filter **170** is mounted is parallel to the flow of contaminated water, as illustrated in FIG. 6, a first inclined portion **111b** and a second inclined portion **113b** may have a sharp slope at the front or rear end. In this case, vortices may be formed in the contaminated water by the first slope **111b** and the second slope **113b** in a portion of the laminar (streamline) flow.

In this case, in order to minimize the occurrence of vortices, the length between the point where the lines being extended in the lengthwise direction of the filter housing **110** along the outer circumferential surface of the first inclined portion **111b** provided at the top and bottom of the filter housing **110** meet and the point where the first inclined portion **111b** ends may be formed to be larger than the diameter of the filter housing **110.**

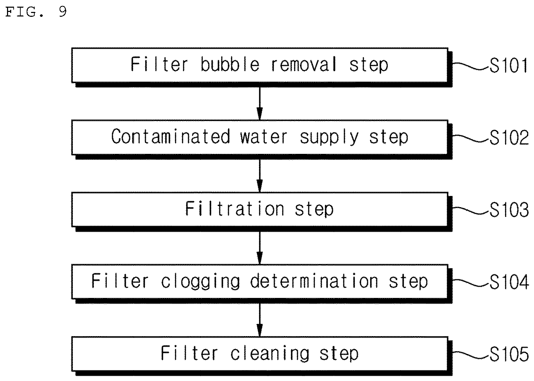

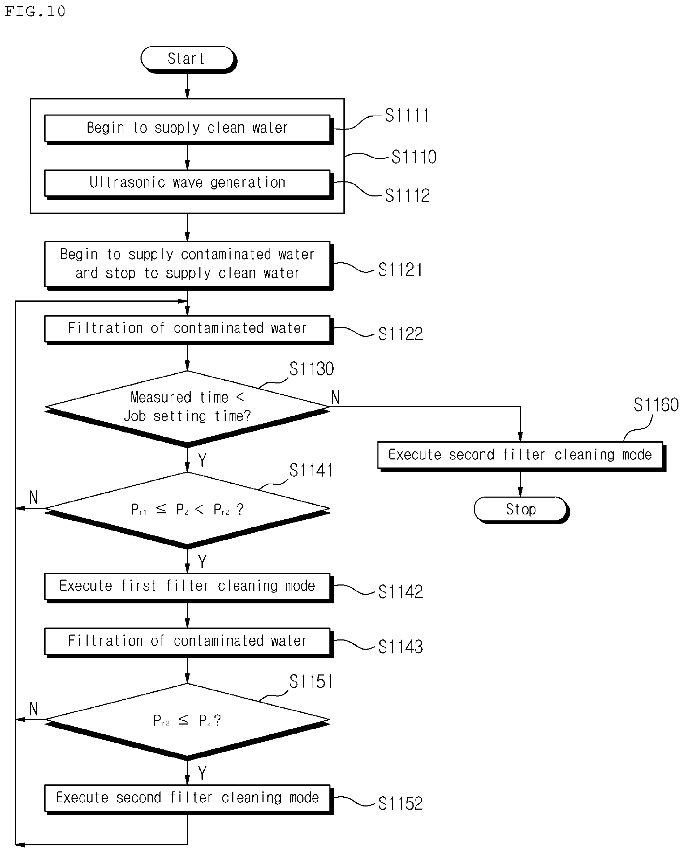

Meanwhile, a control method of the filter apparatus **1** according to an embodiment of the present invention for smooth filtration of contaminated water will be described with reference to FIGS. 9 and 10.

In this case, a filter apparatus **1** comprises: a distribution duct **10** through which contaminated water containing foreign substances flows; a filter housing **110** provided inside the distribution duct **10** and being extended in the lengthwise direction of the distribution duct **10;** a filter assembly **100** comprising a cross flow type filter for water treatment **170** being provided on the outer circumferential surface of the filter housing **110,** filtering a part of contaminated water, and guiding it inside the filter housing **110;** an ultrasonic generator **20** adjacent to the filter assembly **100** and generating ultrasonic waves; a pressure sensor **32** that is provided spaced apart toward the downstream side from the filter assembly **100** and detects the water pressure of the distribution duct **10;** and a control unit **55** that controls the cleaning of the filter **170** through a signal received from the pressure sensor **32.**

In the control unit **55,** an input unit (not shown) that receives a control command from a user and a display unit (not shown) that displays the input control command may be formed therein. The control unit **55** controls the opening and closing valve and the ultrasonic generator **20** through a signal received from the pressure sensor **32.**

The filter apparatus **1** may further comprise a pressure sensor **31** that is provided spaced apart from the filter assembly **100** toward the upstream side and detects the water pressure of the distribution duct **10,** wherein the pressure sensor **31** spaced apart toward the upstream side is referred to as a first pressure sensor **31,** and the pressure sensor **32** spaced apart toward the downstream side is referred to as a second pressure sensor **32.**

Referring to FIG. 9, the control method comprises: a filter bubble removal step **S101,** a contaminated water supply step **S102,** a filtration step **S103,** a filter clogging determination step **S104,** and a filter cleaning step **S105.**

The filter bubble removal step **S101** is a step of removing bubbles that may be formed when a fluid is supplied. This is to prevent air bubbles that may occur when contaminated water is first supplied to the filter **170** exposed to air, and is a step of preventing the formation of air bubbles rather than removing already formed air bubbles.

The contaminated water supply step **S102** is a step of opening a third opening and closing valve **53** and the fourth opening and closing valve **54** to allow contaminated water to flow inside the distribution duct **10.**

The filtration step **S103** is a step in which contaminated water flowing inside the distribution duct **10** passes through the filter **170.**

The filter clogging determination step **S104** is a step in which the control unit **55** determines whether the filter **170** is clogged by using the water pressure detected by the first pressure sensor **31** and the second pressure sensor **32.**

The filter cleaning step **S105** is a step in which when the control unit **55** determines whether the filter is clogged or not, a first opening and closing valve **51** and a second opening and closing valve **52** are opened, or at the same time, the ultrasonic generator **20** controls the ultrasonic generator **20** to generate ultrasonic waves.

The control method will be described in more detail with reference to FIG. 11.

The filter bubble removal step **S1110** comprises a purified water supply step **S1111** of supplying pre-filtered clean water into the filter housing **110** by opening the opening and closing valve of the first filtration duct **41,** and an ultrasonic generation step **S1112** of generating ultrasonic waves toward the filter **170** by the ultrasonic generator **20** when supplying clean water. In FIG. 11, it is shown that they are executed sequentially, but they may be executed simultaneously, and only one of them may be executed if necessary. These explanations do not exclude generating ultrasonic waves toward the filter **170** by the ultrasonic generator **20** in the purified water supply step **S1111.**

The purified water supply step **S1111** is also a step in which clean water is supplied inside the filter housing **110** without passing through the filter **170** so that foreign substances previously accumulated in the filter **170** are discharged to the distribution duct **10.**

After that, the third opening and closing valve **53** and the fourth opening and closing valve **54** are opened so that contaminated water flows inside the distribution duct **10,** and the first opening and closing valve is closed, thereby executing a clean water supply stopping step **S1121.** After that, a contaminated water filtering step **S1122** is executed. Thereafter, the control unit **55** measures the filtration elapsed time, and determines whether the measurement time elapses from the job setting time inputted through the input unit **(S1130).**

If it is determined that the measurement time has elapsed the job setting time **(S1130-Y),** the control unit **55** controls to end after executing a second cleaning mode **(S1160),** which will be described later.

If the control unit **55** determines that the measurement time has not elapsed from the job setting time **(S1130-N)**, the control unit **55** starts cleaning the filter **170** according to the pressure of the second pressure sensor **32.**

When the filter **170** is clogged, the water pressure at which the second pressure sensor **32** is located increases. This is because the amount of contaminated water passing through the filter **170** is reduced due to the clogging of the filter **170.** When the pressure value detected by the second pressure sensor **32** rises and falls within a specific range, for example, when the pressure value detected by the second pressure sensor **32** is greater than or equal to the first reference value **Pr1** and the second reference value is less than **Pr2 (S1141-Y),** the first filter cleaning mode is executed **(S1142).**

The first filter cleaning mode is a step in which ultrasonic waves are generated by the ultrasonic generator **20.**

If the pressure value detected by the second pressure sensor **32** is not within a specific range, that is, when the pressure value detected by the second pressure sensor **32** is less than the first reference value **Pr2 (S1141-N),** the first filter cleaning mode will not be executed.

When the cleaning of the filter **170** is finished by the first filter cleaning mode, filtration of contaminated water is continuously executed **(S1143).**

After that, if the pressure value detected by the second pressure sensor **32** is within a specific range **(S1151-Y),** that is, the pressure value detected by the second pressure sensor **32** exceeds the second reference value **Pr2.** In one case, the second filter cleaning mode is executed.

The second filter cleaning mode is a step in which the ultrasonic generator **20** generates ultrasonic waves and supplies pre-filtered water into the filter housing **110.** The high pressure means that the filter **170** is clogged severely. If the pressure value detected by the second pressure sensor **32** does not exceed the second reference value **(S1151-N),** the second filter cleaning mode will not be executed.

As described above, although the present invention has been explained by limited embodiments and drawings, the present invention is not limited thereto, and the technical idea of the present invention, and it goes without saying that various modifications and variations are possible within the equivalent scope of the claims to be described below by those of ordinary skill in the art to which the present invention pertains.

**DESCRIPTION OF SYMBOLS**

| | |
|---|---|
| 1: filter apparatus according to an embodiment of the present invention | |
| 10: distribution duct | 11: supply duct |
| 12: connection duct | 13: discharge duct |
| 70: spacer | 100: filter assembly |
| 110: filter housing | 130: second support part |
| 150: first support part | 170: filter |
| 173: micropore | |

## Claims

1. A filter for water treatment, which is a cross flow type filter for water treatment, comprising:
a metal thin plate; and
a plurality of micropores passing through the metal thin plate so as to filter water flowing on one side of the metal thin plate,
wherein a micropore includes:
an inlet port being formed on one surface of the metal thin plate, wherein water flows in the micropore through the inlet port;
a discharge port being formed on the other surface positioned opposite from the one surface of the metal thin plate, wherein the water flowing in through the inlet port is discharged through the discharge port; and
a curved portion, being convexly curved towards an inside of the micropore, connecting the inlet port and the discharge port, wherein the curved portion and the other surface form a singular surface.

2. The filter for water treatment according to claim 1, wherein the curved portion and the one surface of the metal thin plate form the singular surface.

3. The filter for water treatment according to claim 1 further comprising a discharge adjacent portion, provided on the other surface of the metal thin plate, located between the two closest micropores,
wherein the discharge adjacent portion is formed convex in a direction away from the metal thin plate.

4. The filter for water treatment according to claim 3 wherein the discharge adjacent portion is formed on the singular surface.

5. The filter for water treatment according to claim 1 wherein the micropore is formed with a minimum diameter in one region of the curved portion, and
wherein the ratio between the diameter of the inlet port, the minimum diameter, and the diameter of the discharge port is 2:1:2.

6. The filter for water treatment according to claim 1 wherein the micropore has a minimum diameter in one region of the curved portion, and
wherein the ratio between the diameter of the inlet port, the minimum diameter, and the diameter of the discharge port is 5:1:5.

7. The filter for water treatment according to claim 1 wherein the micropore is formed with a minimum diameter in one region of the curved portion, and
wherein the ratio of the minimum diameter to the thickness of the metal thin plate is 50% or more.

8. A filter apparatus comprising:
a distribution duct where contaminated water containing foreign substances flows;
a filter assembly provided inside the distribution duct and comprising a filter housing formed by being extended in the longitudinal direction of the distribution duct, and a cross flow type filter for water treatment provided on an outer circumferential surface of the filter housing and filtering a part of the contaminated water and guiding it into the filter housing; and
spacers provided at a regular interval along the outer circumference of the filter assembly so that a distance between the outer circumferential surface of the housing and the inner circumferential surface of the distribution duct is kept constant along the outer circumference of the housing.

9. The filter apparatus according to claim 8 wherein the spacers are extended in the lengthwise direction of the filter assembly.

10. The filter apparatus according to claim 9 wherein the spacers are formed in a streamlined shape.

11. The filter apparatus according to claim 8 wherein the center of mass of the filter for water treatment is disposed toward the upstream side spaced apart from the center of mass of the filter housing.

12. A control method for a filter apparatus comprising:
a distribution duct where contaminated water containing foreign substances flows;
a filter assembly provided inside the distribution duct and comprising a filter housing formed by being extended in the lengthwise direction of the distribution duct, and a cross flow type filter for water treatment provided on an outer circumferential surface of the filter housing and filtering a part of the contaminated water and guiding it into the filter housing;
an ultrasonic generator adjacent to the filter assembly and generating ultrasonic waves; and
a pressure sensor that is provided toward the downstream side spaced apart from the filter assembly and senses a water pressure of the distribution duct,
wherein the control method comprises the steps of:
supplying pre-filtered clean water into the filter housing;
supplying contaminated water containing foreign substances into the distribution duct after stopping supplying of pre-filtered clean water; determining whether the filter is clogged based on the pressure detected by the pressure sensor; and
cleaning the filter by performing at least one of generating ultrasonic waves in the ultrasonic generator, and supplying pre-filtered water to the filter housing, when it is determined that the filter is clogged in the step of determining whether the filter is clogged.

13. The control method for a filter apparatus according to claim 12, wherein in the step of supplying the clean water, the clean water is supplied into the filter housing without passing through the filter so that foreign substances of the filter are discharged to the distribution duct.

14. The control method for a filter apparatus according to claim 12, wherein in the step of supplying the clean water, when the clean water is supplied, the ultrasonic generator generates ultrasonic waves toward the filter for water treatment.

15. The control method for a filter apparatus according to claim 12, wherein in the step of supplying the clean water, wherein the step of cleaning the filter comprises: a first filter cleaning mode in which ultrasonic waves are generated by the ultrasonic generator; and a second filter cleaning mode in which ultrasonic waves are generated by the ultrasonic generator and pre-filtered water is supplied into the filter housing.

16. The control method for a filter apparatus according to claim 15, wherein in the first filter cleaning mode is executed when the pressure detected by the pressure sensor is within a predetermined range, and the second filter cleaning mode is executed when the pressure detected by the pressure sensor exceeds the predetermined range.
